# EUROPEAN PATENT APPLICATION

(11) **EP 2 393 066 A1**
(43) Date of publication of application: **07.12.2011**
(21) Application number: 10169684.7
(22) Date of filing: 15.07.2010
(51) Int. Cl.: G07C 5/00, G08G 1/123, G07C 5/08, B60R 25/00

(54) **Configuration management for a fleet of equipment units**

(30) Priority: 04.06.2010 SE 1050579
(71) Applicant: BAE Systems Bofors AB, 691 80 Karlskoga (SE)
(72) Inventor: Staaf, Hjalmar, 692 35 Kumla (SE)
(74) Representative: Kitzler, Michael

(57) **Abstract**

A computer implemented method for configuration management of a fleet of deployed equipment units each being provided with an on-board data processing module and a data storage module in a local service platform system being communicatively coupled to a central data processing system, comprising the steps of: Generating by means of a local configuration manager software a definition of the configuration of components in an equipment unit by receiving a component identification and/or type code for said components via an input interface of a local service platform system associated with the equipment unit; Storing a configuration definition in a configuration definition data structure of said local service platform system; Communicating the configuration definition to a central service platform system; Analyzing configuration definitions for a fleet of equipment units dependent on operational data generated in the local platform system of respective equipment units and communicated to the central service platform system.

## Description

### Field of the invention

The present invention relates to a computer implemented method and system for enabling configuration management based on condition based operational status data for a fleet of equipment units.

### Background of the invention

Within military and other fleet type of activities and functions, the management in the sense of planning and recording of maintenance, repair and configuration up-dates of individual equipment units of the fleet (e.g. vehicles, machinery, arms) has traditionally been made using manual procedures. Examples of manual procedures are e.g. hand written logbooks and manual inspection. Such systems are typically very static, i.e. not very adaptable to the current situation, and rather than acting on and predicting the coming needs will react to them when they occur. Alternatively, planning of maintenance schemes will be made with large margins, leading to unnecessary withdrawal of properly working equipment from the operational fleet and unnecessary material costs. Also, the recording, analysis and planning of the maintenance on the whole fleet of equipment is cumbersome, costly and usually involves a long delay between the observation of a fault or inefficiency at the individual unit and the point when a manager realizes a fault or inefficiency is systematic and starts acting upon it.

Recently, monitoring of the performance of individual equipment units of a fleet has increasingly been accomplished using systems that automatically collect performance, usage and status data and analyzes it in order to predict for coming maintenance, service and repair needs. Such systems typically involve data collection using sensors and similar hardware which is integrated into the particular equipment unit being monitored. The sensors may monitor attributes relating to usage, damage and wear, and the system often also comprises means for registering performed maintenance and service measures.

In these systems the collected data is typically processed and/or analyzed by means of an analysis module placed onboard the equipment unit, and then all or selected parts of the results are sent to a centrally placed application/data management server for evaluation and decision on actions to be taken. Alternatively, raw sensor data is sent to the central database, where both the processing, analysis and evaluation takes place.

Accordingly, in the presently existing maintenance support systems, much of the management activities regarding the health and maintenance for individual equipment units, as well as for the whole fleet, are performed at a central data management module, located remotely with respect to the equipment units. This includes for example the tasks of health monitoring, maintenance planning and keeping maintenance journals for individual equipment units, as well as performing analysis and evaluation on the fleet level to identify multiple occurrences and fleet wide problems or maintenance needs.

For fleets where the equipment units are fielded and placed remotely from the central data management module for long periods of time such a configured maintenance support system is however not optimal. This is particularly true for fleets, such as military fleets, where the equipment units are placed at locations where the contact with the central data management module is easily interrupted and where the working and maintenance of the equipment units is crucial for the operational tasks of the fleet. In such systems it is of importance that the individual equipment units can be monitored and maintained autonomously, irrespective of the state of contact to the central data management module.

In addition, these kinds of maintenance support systems generally monitor the absolute health and/or usage of the subsystems of the equipment units, without regarding the usage conditions.

### Prior art

Examples of related art are found in the following publications.

Patent document US2004/0078125 A1 discloses an automated health monitoring system for a fleet of vehicles. The monitoring system comprises three operational levels of data acquisition and analysis; two levels being maintained onboard each vehicle and the third being maintained at a location remote from the vehicles. At the first level one or several data acquisition and analysis modules (DAAMs) onboard each vehicle collects sensor data indicative of measurable physical attributes , such as temperature, acceleration, stress, load etc., relating to sub-systems of the vehicle. At the second level a command control and analysis module (CCAM) located on each vehicle collects and the analysis results from each DAAM on the vehicle and analyzes them in relation to one another to identify potential sources of anomalies on the vehicle. By using and comparing data from several subsystems broader system problems related to the whole vehicle can be identified. At the third level a remotely located terminal collection and analysis module (TCAM) collects the data relating to sub-system and vehicle health and analyzes it for the whole fleet of vehicles to identify multiple occurrences of vehicle and subsystem anomalies. The fleet results of the TCAM's analysis are provided to organizations responsible for the operation, maintenance and manufacturing of vehicles in the fleet.
This system is arranged to autonomously monitor the fleet of vehicles and provides no interactivity with the operators of the vehicles.

Patent document WO 02/17184 A1 discloses a system for allowing a user to perform remote vehicle diagnostics, vehicle monitoring, vehicle configuration and vehicle reprogramming for a vehicle or a fleet of vehicles. Each vehicle within the fleet is equipped with a smart device which is coupled to the data bus within each vehicle. Data relating to vehicle parameters such as road speed, engine RPM, coolant temperature, air inlet temperature etc, are sent and received at a remote repository database, using satellite and terrestrial wireless communications technology. The data in the repository database can be used by the system operator to perform different types of analyses, for example to obtain real-time fleet characteristics, trend analysis and diagnostics. The invention thus enables fleet managers to remotely perform total fleet logistics and reduces the need to physically bring fleet vehicles to a repair, maintenance or configuration facility.

Patent document US2002/0156558 discloses an operator interactive apparatus for monitoring work vehicles is disclosed. The operator interactive apparatus includes an operator and machine interface for generating inputs from a work vehicle operator. The generated inputs describe conditions or problems associated with the work vehicle. The information collected by a microprocessor is communicated directly to a remote data center over a wireless data link. The information is shared and a technical service group may dispatch parts and/or maintenance information directly to a fleet operation center or alternatively directly to the operator of the work vehicle.

Patent document US2002198997 discloses a system and method for on board maintenance instructions and records. The system discloses a portable computing device disposed on a field asset and adapted to store the complete maintenance history, services, instructions and technical information to perform maintenance. An update of this information is also possible to receive from remote central sites.

### Object of the invention

The general object of the present invention is to provide a system and services for condition based configuration management of a fleet of deployed fielded equipment units..

### Summary of the invention

The objects is, according to the present invention, solved by a configuration management services in a service platform system with a local service platform system on the equipment units and a central service platform system at a central site. The local service platform system is devised to obtain condition based operational status data to create a digital operational status log. Condition based operational status data are communicated to the central service platform system where collections of operational status data for individual equipment units as well as for a fleet of equipment units are stored. A digital maintenance schedule as well as a configuration definition are generated in a digital maintenance support unit associated with or comprised in the local service platform system of an equipment unit. Operator directives for the maintenance schedule are generated dependent on control data in the local service platform system or dependent on control data received from the central service platform system.

Configuration management according to an aspect of the inventive concept for a fleet of deployed equipment units comprises:
a. Generating by means of a local configuration manager software a definition of the configuration of components in an equipment unit by receiving a component identification and/or type code for said components via an input interface of a local service platform system associated with the equipment unit;
b. Storing a configuration definition in a configuration definition data structure of said local service platform system;
c. Communicating the configuration definition to a central service platform system;
d. Analyzing configuration definitions for a fleet of equipment units dependent on operational data generated in the local platform system of the respective equipment units and communicated to the central service platform system.

The service platform system enables an organization to maintain readiness and sustainability for a fleet of equipment units. The inventive concept addresses the typical situation for an army having deployed military equipment such as military vehicles, weapon systems, military communications equipment, weapon carrier, weapon platform that are systematically or strategically distributed in fielded circumstances. The inventive concept is also useful for other kinds of fleets of equipment such as rescue vehicles, transportation vehicles, surveillance installations or weather monitoring stations.

### Brief description of the drawings

The invention will be explained in more detail in the following description, referring to the enclosed figures, where:
Fig 1 illustrates a general overview of the architecture of the service platform system according to the inventive concept;
Fig 2 illustrates schematically functions in a local service platform system according to an embodiment of the invention.
Fig 3 illustrates schematically the data flow in a more detailed view of an embodiment of the service platform system.
Fig 4 illustrates schematically an embodiment of the general configuration of a local platform system on an equipment unit.
Fig 5 shows schematically an embodiment of the internal configuration of a local platform system unit.
Fig 6 shows schematically parameters for activation a maintenance directive according to an embodiment of the inventive concept.
Fig 7 shows schematically steps of the service platform method in the service platform architecture according to the inventive concept;
Fig 8 shows schematically steps of the on-board service platform method in the on-board service platform system according to the inventive concept;
Fig 9 shows schematically steps of the central service platform method in the central service platform system according to the inventive concept;
Fig 10 shows schematically steps of the condition based maintenance schedule method in the to the inventive concept;
Fig 11 shows schematically steps of the configuration management according to the inventive concept.

### Detailed description

### Architecture of service platform system - Introduction

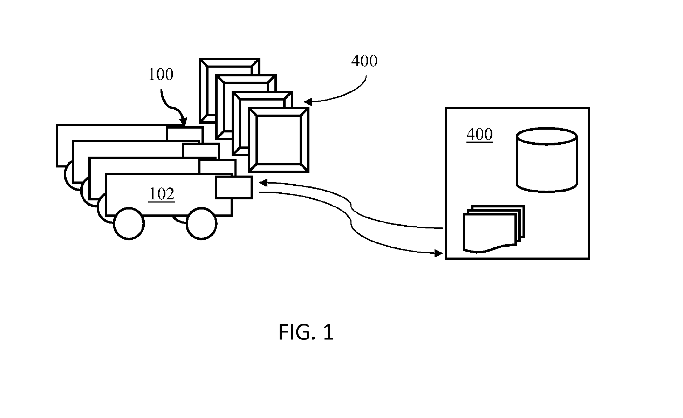

Fig 1 shows a general overview of the architecture of a service platform system enabling readiness and sustainability services for a fleet of fielded equipment units according to the inventive concept. The service platform system 1 comprises a local service platform system 100 provided at individual equipment units 102 in a fleet, a central service platform system 200 provided at a central site and a digital maintenance support unit 400 associated with and provided for an operator of the individual equipment unit. The task of the local service platform is to collect current and factual operational status data to create a digital operational status log. By this configuration of a service platform system architecture, computer capacity is distributed over the units comprised in a fleet with the effect that the requirements on data transmission bandwidth as well as on central data handling and computing are reduced.

Operational status data is wirelessly transferred to the central service platform where the operational status log is compiled and stored, and made available for various analysis, back office services and control operations for local services at the individual unit. The dual service platform system with local and central instances, respectively, is a technical backbone system that enables readiness and sustainability services to be performed for a fleet of fielded or deployed equipment units. Such readiness and sustainability services are for example directed to monitoring, planning, operating and maintaining the fleet.
An important factor in achieving a high degree of readiness and sustainability is to have an efficient maintenance schedule. The architecture according to the inventive concept enables condition based maintenance of the equipment units in the fleet. A digital maintenance schedule is generated dependent on the operational status log data and is made available to the operator of the equipment unit via the digital maintenance support unit 400.

The performance and the maintenance schedule depend on the configuration of components at the equipment units. The service platform system architecture supports configuration management inter alia based on experience data gathered with the condition based operational status data. Preferably, information pertaining to operational status data, the maintenance schedule and configuration information is stored in the local system for use and control of local functions and services at the equipment unit. The same information is mirrored and stored in the central system as well, were it is used by functions and services primarily for a fleet of equipment units rather than individual equipment units but also to monitor the health of individual equipment units.

### Overview of service platform system

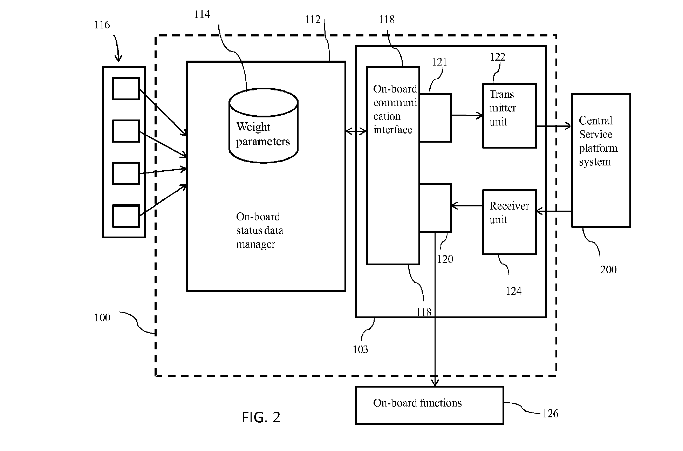

Fig 2 shows schematically functions in a local service platform system according to an embodiment of the invention. The local service platform system 100 comprises an on-board status data manager 112 that is devised to receive operational status data 116 from sensors and counters provided on the equipment unit as well as from a manual input interface. The on-board status data manager 112 comprises a storage means for weighting parameters 114 and data processing means adapted to process status data according to predetermined schemes programmed in the processing means. An on-board communications manager 103 comprising an on-board communication interface 118 coupled to the on-board status data manager 112 and is provided with an on-board communications gate 120 for communicating with on-board functions 126 and external communications gate 121 for communication with a central service platform unit 200 via a transmitter unit 122 and a receiver unit 124. The central service platform system 200 is provided with a corresponding communications manager and communications interfaces.

The local platform system, the central platform system, the digital support unit and other functions are realised by means of computerized electronics and comprises per se known components such as a data processing unit coupled to data storage means, I/O interfaces, AD/DA converters and communications components. The data processing unit is programmed to execute computer program code portions that realise the described functions of the inventive concept.

### Functionality in service platform system

The service platform system and an inherent service platform method realizes functionality in form of management services for enabling readiness and sustainability services for a fleet of deployed and fielded equipment units. The need to maintain readiness and sustainability is a typical situation for military equipment such as military vehicles, weapon systems, military communications equipment, weapon carrier, weapon platform that are systematically or strategically distributed in fielded circumstances. This situation is also typical for other kinds of fleets of equipment such as rescue vehicles, transportation vehicles, surveillance installations or weather monitoring stations.

### Generating condition based operational status data

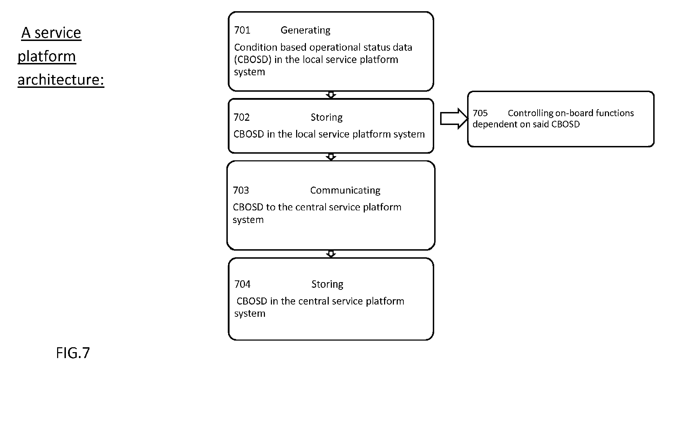

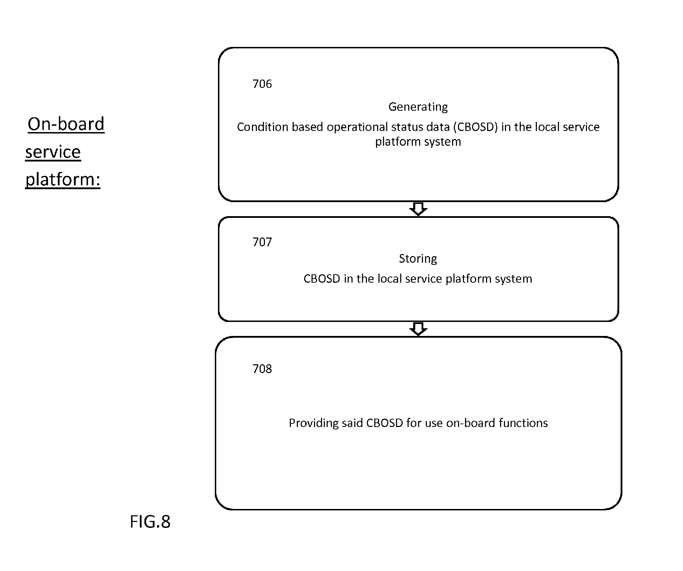

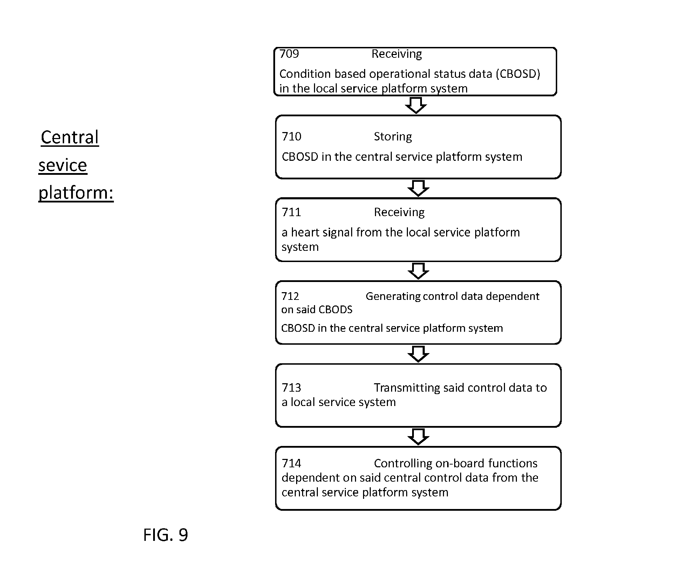

The service platform method comprises, Cf. Fig 7-9, generating condition based operational status data (701,706) dependent on equipment status data derived from sensor signal data and/or manually input data and dependent on predetermined relations between said equipment status data and predetermined weighting parameters for weighting equipment status data. The manual input of operational status data by an operator of the equipment unit may be guided by an interactive manual input interface. The condition based operational status data is stored in the local platform system step (702,707) and are provided (708) for use by or for controlling (705) on-board functions and are preferably communicated (703) to a remotely located central fleet management system devised for receiving (709), storing (704) and collecting status data from said fleet of military equipment units. In the central system the condition based operational status data is inter alia used for generating control data (712), which may be transmitted (713) to a local service platform system of an equipment unit where it is used to control (714) on-board functions..

Current and factual operational status data are thus collected and processed into condition based operational status data that on one hand is stored on-board in the local service platform system and on the other hand is communicated to and stored at a central fleet management system in the central service platform system. The equipment operational status data comprises a selection of measurement values of physical parameters typically related to: component status, for example tire pressure in wheeled equipment; environmental status, for example ambient air temperature; usage frequency, for example number of revolution, time of operation, number of shootings of a gun or cannon; usage conditions, for example velocity. The operational status data for the equipment unit is collected and time stamped by an on-board status data acquisition module. The thus time dependent operational status data of the equipment unit is received as an automatic input from sensors in the equipment unit; and/or as a manual input from an operator of the equipment unit. A data processing unit is devised with a computer program to generate operational status data indicating the usage of a selected component dependent on predetermined relations between said automatically and/or manually input equipment status data and predetermined weighting parameters.

The weighting parameters are preferably derived from an experience based status data collection that embodies experienced data for a selection of component status, environmental status, usage frequency and usage conditions. The weighting parameters are for example adapted to weight the operational status data in relation to the load on a certain component. The weighting parameters are comprised in weighting with adjustable constants.

For example, a certain combination of component status such as temperature of the component, environment status such as ambient air pressure and temperature, usage status such as number of revolutions of a rotating part in component and usage condition such as velocity, renders a specific weighting parameter for calculating a condition based operational status value.

Selected status data are stored in the local service platform system by means of an on-board status data storage module. The stored status data is a selection of operational status data, condition based operational status data, external data received from a remote transmitter.

### Communication between units in service platform system

Data are communicated to different receivers in the system by means of an on-board data communications manager module devised for on-board and external communication. The data communications manager is devised to directing on-board generated data pertaining to selected operational status data and/or selected condition based operational status data for communication to selectable on-board and/or remote receiving units dependent on predetermined rules. These rules are implemented by means of an information switch that directs the communication of data to destinations that are defined in the rules. The data are communicated via a selectable communications channel dependent on predetermined communication rules, for example the communications channel may be mobile broad band in certain situations and encrypted radio communication in other situations. The data communications manager is further devised to receiving external data from a remote transmitter via a selectable communications channel dependent on predetermined communications rules and to directing said external data to selectable on-board receiving units.

### On-board control dependent on condition based operational status data

On-board functions may be controlled by an on-board control data manager dependent on the condition based operational status data as received from an on-board status data manager. The on-board functions may also be controlled dependent on central control data received from the central fleet management system.

### Collecting condition based operational data in central fleet management system

The condition based operational status data and possibly selected non-processed status data is communicated from the on-board data communications manager module of equipment units and received in a central service platform at a central site. A central status data manager for said fleet of equipment is devised to direct said condition based operational status data and possibly non-processed status data to one or more receiving units to store selected data collections of the central status data manager dependent on predetermined rules. An information switch is preferably provided to implement these rules. The condition based operational status data is provided and made available for use by central service functions by means of a central status data interface.

### Analyzing modules in Central service platform

The condition based operational status data and possibly some collected operational status data is analyzed on unit level in the central service platform system by means of a central equipment unit status data analysis module dependent on predetermined rules. The rules are selected to define specific services, for example the service of generating directives in a digital maintenance schedule for an individual equipment unit. A central fleet status data analysis module analyzes the condition based operational status data and possibly some collected operational status data on fleet level for a plurality of equipment units, also dependent on predetermined rules, for example for the purpose of generating digital maintenance schedule directives.

### Control data from Central service platform to local service platform dependent on condition based operational status data

Embodiments of the central service platform are provided with a central control data manager dedicated to a specific fleet of equipment and devised to generating control data for controlling on-board functions dependent on the collected condition based operational status data and predetermined control rules. The control data is communicated to a selected on-board control data manager at a selected equipment unit and is used by an on-board service function to control other functional modules.

### Data flow in service platform system

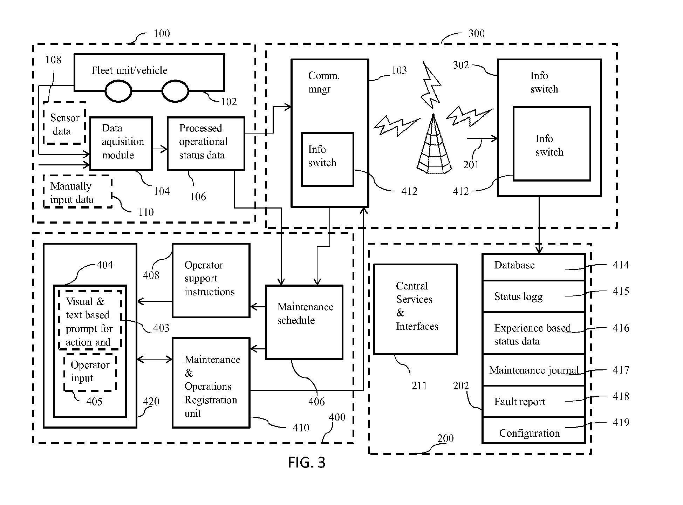

Fig. 3 shows a schematic view of the data flow and functional blocks in a maintenance system for a fleet of equipment units, where a local service platform system 100 is provided on an equipment unit 102 in the form of a military vehicle in a fleet. An on-board status data manager 112 comprises or is coupled to a data acquisition module 104 to which sensor data 108 from said fleet unit 102 is transmitted from sensors and counters in the equipment unit. The data acquisition module 104 is also adapted to receive manual input data 110 from a human operator of said fleet unit 102. This operational status data gathered in the data acquisition module 104 are processed to form processed condition based operational status data 106 that can be output to an on-board function such as a digital maintenance support unit 400 comprising a man-machine interface 401, where information generated dependent on the operational status data can be delivered to a human operator, and to a central system 200 where they can be stored and analysed together with similar data from other local systems 100'.

The processed operational status data, i.e. the condition based operational status data is stored locally in a designated memory or database in each local service platform system as well as centrally in a memory or database in the central service platform system. Thereby the risk for data loss is minimized and the system is more robust.

The digital maintenance support unit 400 is arranged to receive processed condition based operational status data 106 from the local system 100 and/or central control data or instruction data 402 from the central system 200 and to give display information 403 via a display prompt 404 of a man-machine-interface MMI 401 to a human operator for example regarding a status of different components of the fleet unit 102 and/or regarding required maintenance of the fleet unit 102, among other things. In order to arrive at such display information 403, the processed condition based operational status data 106 and the central instruction data 402 are received and processed by maintenance schedule manager into a maintenance schedule 406 and processed to form operator support instructions 408 regarding maintenance operations that are due to be performed in a near future. Said operator support instructions 408 are presented as display information 403 on the display prompt 404 where an operator can receive visual and text based instructions regarding said maintenance operations. The operator can also enter information as operator input 405 to the display prompt 404 regarding said maintenance operations and this operator input 405 can be stored in a maintenance and operations registration unit 410 and can also be forwarded as maintenance and operations registration data 407 to the central system 200 for storage, processing or other similar operations.

In the central system 200, central input information 201 such as the processed condition bases operational status data 106 from the local system 100 and maintenance and operations registration data 407 from the man-machine interface 400 are received and processed and can be transmitted as processed output 202 directly back to the local system 100 or the man-machine interface 400. Such central input information 201 from a number of similar local systems 100' or a number of similar man-machine interfaces 400' can be gathered and processed together to arrive at combined data 204 describing a larger number of local systems 100' and/or man-machine interfaces 400'. As a result of such processing, data such as status logs, experience based status data, maintenance journal for each local system 100 or all local systems 100' together, fault reports or configuration data can be achieved.

In order to allow said central system 200 to communicate with a plurality of local systems 100' and man-machine interfaces 400', a communication system 300 is provided, comprising a central communication manager 302 for receiving said central input information 201 and transmitting said processed output 202 and also comprising a series of local communication managers 304' in such a way that each local system 100 and man-machine interface 400 are connected to one such local communication manager 304 for receiving central instruction data 402 and transmitting processed operational status data 106 from said local system 100 along with maintenance and operations registration data 407 from said man-machine interface 400. It is to be noted that the central instruction data 402 received by a local communication manager 304 can be identical to the processed output 202 from the central system 200 but can also comprise other data. Similarly, the central input information 201 can be identical to the processed operational status data 106 and/or the maintenance and operations registration data 407 transmitted by a local communication manager 304 but can also comprise data transmitted by a series of such communication managers 304' and/or other data.

The local service platform unit as well as the central service platform system comprises information switches 412 that sort the information according to its size and priority for communication, according to kind of information for storage in the local system and in the central system. In the central system 200 the information is for example sorted into a selection of a general database 414, a status log database 415, an experience base status database 416, a maintenance journal database 417, a fault report database 418 and/or a configuration database 419. The data is available for specifically adapted central services and interfaces. Similar databases may be configured in the local platform system, preferably at least the a database storing condition based operational status data in a status log is configured in the local system as well as in the central system.

### Communication between local platform system and central platform system

The communication system 300 comprises communication components on the local on-board platform system and on the central platform system, respectively. The communication system comprises in preferred embodiments a plurality of different types of communication means, for example satellite communication such as the Iridium system, GSM, GPRS/GX and communication radio on selected channels and can therefore be controlled to conduct near real-time communication. The communications managers are devised with control means for selecting type of communications means according to the situation, circumstance or status of the equipment and dependent on the situation and according to predetermined rules. Such rules are for example:
1. Low priority information => select slow and low cost communication type;
2. High priority information => select fast communication type at any cost;
3. Radio silence => select satellite type;
4. Highly classified information => enciphered high security communication type.

For this purpose the local system as well as the central system comprises information switches 412 that sort the information according to priority classification, e.g. class 1 high priority, 2 medium priority and 3 low priority, and sorts the information in different queues for transmission and is temporarily stored at the local platform system. For example class 1 high priority information may always be transmitted via satellite. For less prioritized information the communication type and transmission rules are selected dependent on predetermined rules in a communication protocol, enciphers and compresses the data, and selects the most appropriate communication type. In order to optimize communication the information may be processed into compressed messages in data a format having a maximum size of data according to predetermined rules, e.g. following the 2K rule. The situation or the circumstances may be detected by the communication manager dependent on sensor signals, be manually input by an operator of the equipment unit, depend on cost tables for communications or follow a predetermined schedule. For example, the local system may comprise a stealth button for inputting a command for communication silence or radio silence situation, and a reset button for inputting a control command to reset the mode to normal situation. Further examples of different situations may for example for military equipment be: rest mode, exercising, in battle, during maintenance.

When the information is received at the central platform system it is decoded, assorted and directed to a receiving computer, database or operator by the central information switch.

### Heart beat

In order that the correct communications type and communications path be selected as it transmitted from the central platform system to the local platform system, the central information switch must have knowledge of what communications type is currently available at the local platform system. For this purpose, the local platform system is devised to transmit and the central system to receive (711) a heartbeat signal in two levels. At a first level, the heartbeat signal conveys the information that equipment unit hosting the local platform system is alive and available. At a second level, the status signal carries information regarding the status for communication, e.g. regarding the communications type. The central information switch of central platform system is adapted to select transmission type and order of transmission dependent on this heart beat signal from the local platform system, and further dependent on the priority of the information, available transmission paths, cost and situation.

The effect of the technical solution for communication between the local platform system and the central platform system is swift reporting, control on communication costs, adjusted security level, reporting in real time enabled, reporting can wait until good opportunity.

### Data collections

The information switch 412 also sorts the data into different databases 414 dependent on the type of information dependent on predetermined rules. The local system and the central system each comprises a selection of different databases or data collections, for example for a status log 415, experience based status data 416, maintenance journal 417, fault report 418 ,or configuration.

### Embodiment of local service platform system

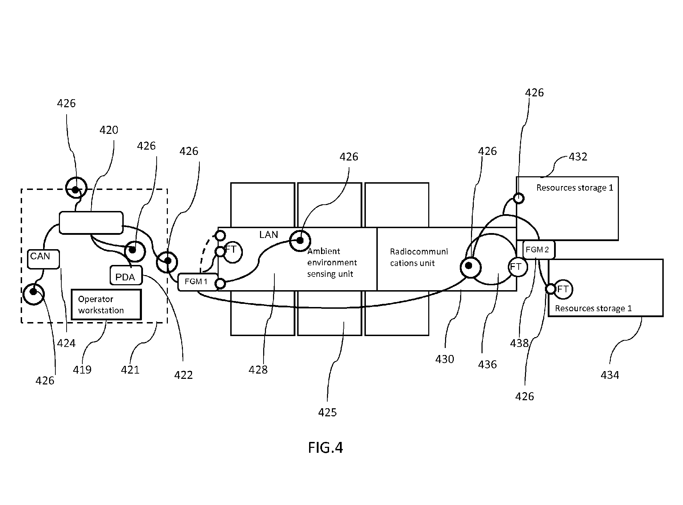

Fig 4 illustrates schematically an embodiment of the general configuration of a local platform system on an equipment unit, in this case a military vehicle. The military vehicle in this example comprises a driver and traction part 421 comprising an operator workstation 419, a load carrier part 425 in this example carrying an artillery piece 436, and a first resource storage 432 for grenades and a second resource storage 434 for charges.

The local platform system unit 420 is here mounted on the driver and traction part of a vehicle of the equipment unit. A man-machine interface 422 for example in the shape of a PDA personal digital assistant is comprised in or coupled to the local platform system unit. A plurality of status detectors such as sensors, detectors or counters 426 as well as the platform system unit 420 are coupled to a data bus, here a CAN bus of the vehicle. Some status detectors 426 and on-board functions are coupled to the local platform system unit via a LAN 425 or a separate wire 427. Between the respective vehicle parts there is a connector unit 438 (FGM) to allow for safe signal transmission between the parts.

The load carrying part 426 is in this example carrying the mentioned artillery piece 436 as well as a sensing unit for detecting ambient environment status 428 and a radio communications unit 430.

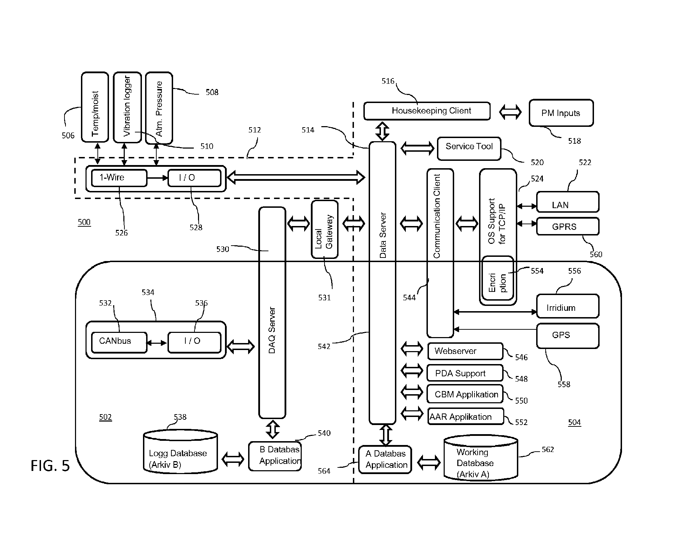

Fig 5 shows schematically an embodiment of the internal configuration of a local platform system unit. The local platform system 504 is coupled to or comprises a data acquisition unit 502. The data acquisition unit comprises a data acquisition DAQ server 530 which via a local gateway 531 is coupled to a data server 542 of the on-board status data manager. The DAQ server 530 is coupled to a data transmission interface (a data bus) 534 in the form of a CAN bus 532 and an I/O interface 536, through which it receives input status data from sensors, detectors or counters that are connected to the CAN bus. The data acquisition unit 502 further comprises a database application program 540 and a log database 538 dedicated to store a status data log.

The data server 542 of the status data manager is coupled to a database application program 564 and a working database 562 devised for storing inter alia status data, processed status data in the form of condition based status data, control data from the central server or from an operator as well as other input data or intermediate data. The data server 542 receives input status data in a status data input line 512 from an I/O interface 528 coupled to a wire connection 526. Various sensors are coupled to the wire input line for example a temperature meter and/or moisture meter 506, a vibration logger 510 or a atmospheric pressure meter 508.

The data server 542 is further coupled to a selection of a webserver 546, a man-machine-interface in the form of a PDA support unit 548, specific application program supporting condition based maintenance 550 and administrative reports application program 552. The data server 542 is further coupled to a housekeeping client 516 and an input interface 518 adapted for inter alia notes or control commands for housekeeping the data manager. A communications client 544 is coupled to the data server 542 and is in its turn coupled to specific communications tools, such as an TCP/IP support unit 524 comprising an encryption unit 554 and utilizing a LAN connection 522 or a GPRS connection 560. A satellite communications tool 556, such as Iridium, and a positioning tool GPS 558 are also coupled to the data server. The data server 542 is controlled by computer programs adapted to control service functions of the local service platform system.

### Generating a digital maintenance schedule

A maintenance schedule comprising operator directives for maintenance tasks are generated dependent on said condition based operational status data in a maintenance support unit comprised in or associated with the local service platform system of an equipment unit. Operator directives for the maintenance may be generated dependent on the condition based operational status data by the local service platform system, or may be generated in a central service platform system dependent on said condition based operational status data and be communicated to a maintenance schedule in the local service platform system. The digital maintenance support unit is preferably wholly or mainly devised to generate the digital maintenance schedule locally dependent on control data from the local service platform system and/or dependent on control data from the central service platform system.

The digital maintenance schedule generated according to the inventive concept is dynamic since it is based on a condition based operational status log that indicates a continuously updated status. This enables maintenance activities to be performed at the right time, thus based on the true state of the equipment unit and at a time when it is appropriate to do maintenance activities according to the current situation or circumstances of the equipment unit. Maintenance directives to an operator are communicated via a digital maintenance support unit comprising a man-machine interface for displaying directives and receiving input information regarding performed directives.

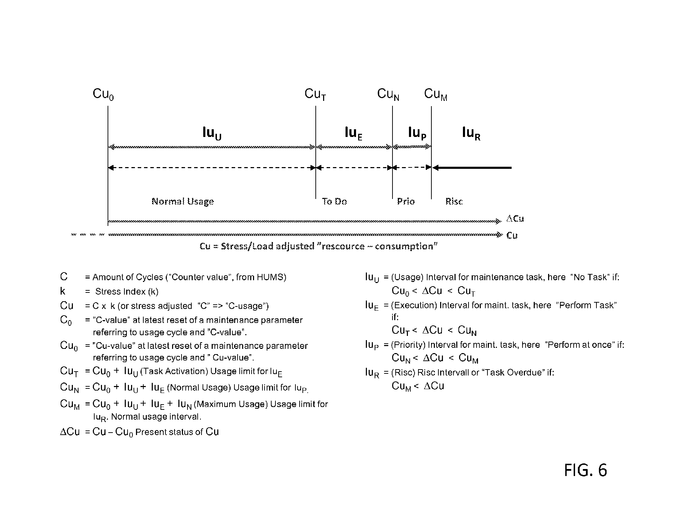

Fig 6 illustrates by way of an example the concept for determining a maintenance need status and for triggering a maintenance directive in relation to a condition based operational status. In the graph the bottom lines indicate the stress/load adjusted resource consumption of a particular resource, for example a component or a stocked resource, Cu and deltaCu. Over time the resource passes Normal usage phase , To Do-phase, Priority phase and Risc phase with regard to the usage of the resource in relation to the need for performing a certain maintenance task according to a directive.
In this example, counter values, calculated derived counter parameters and preset threshold values are used to detect trigger points for establishing the current phase of the resource according to predetermined rules. The notation of the graph represents the following:
C = Amount of Cycles. "Counter value" or other status value , from a HUMS health and usage monitoring system comprised in, implemented by or used by the present invention)
k = Stress Index (k). A stress index may for example calculated dependent on a combination of status sensor values and compared to an experience database.
Cu = C x k (or stress adjusted "C" => "C-usage").
C₀ = "C-value" at latest reset of a maintenance parameter referring to usage cycle and "C-value".
Cu₀ = "Cu-value" at latest reset of a maintenance parameter referring to usage cycle and " Cu-value".
Cu_{T} = Cu₀ + Iu_{U} (Task Activation) Usage limit for Iu_{E}
Cu_{N} = Cu₀ + Iu_{U} + Iu_{E} (Normal Usage) Usage limit for Iu_{P}.
Cu_{M} = Cu₀ + Iu_{U} + Iu_{E} + Iu_{N} (Maximum Usage) Usage limit for Iu_{R}. Normal usage interval.
ΔCu = Cu- Cu₀ Present status of Cu

In the is example the following rules are predetermined for controlling the triggering of service tasks and for monitoring the health status of components.

Normal usage phase:
Iu_{U} = Usage Interval for maintenance task, here "No Task" if: Cu₀ < ΔC_{U} < Cu_{T}

To Do task phase:
Iu_{E} = Execution Interval for maint. task, here "Perform Task" if: Cu_{T} < ΔC_{U} < Cu_{N}

Priority in performing task phase:
Iu_{P} = Priority Interval for maint. task, here "Perform at once" if: Cu_{N} < ΔCu < Cu_{M}

Risk phase, i.e. risk for resource failure:
Iu_{R} = Risc. Risc Intervall or "Task Overdue" if: Cu_{M} < ΔCu

Different parameter types used to determine a task, trigger or a task or generate a new task comprises, for example, a selection of:
Environmental status data such as internal or external temperature, moisture, pressure, vibrations;
Counter values for components, non-weighted;
Counter values for components, weighted dependent on load;
Number of performed maintenance tasks, counter value;
System status values such as internal pressure, temperature, length;
Consumption resources data such as volume of fuel, numbers of ammunition pieces, consumption rate;
Archived performed maintenance tasks;
Archived performed maintenance instructions from central level;
Archived configuration events;
Performed operational report positions;
System generated faults;
Archived remedied faults;
Number of additional maintenance instructions from central level;
Not yet closed configuration events;
Current maintenance schedule activities, maintenance activities deviating from maintenance schedule, operations report;
Non remedied faults reported automatically or manually.

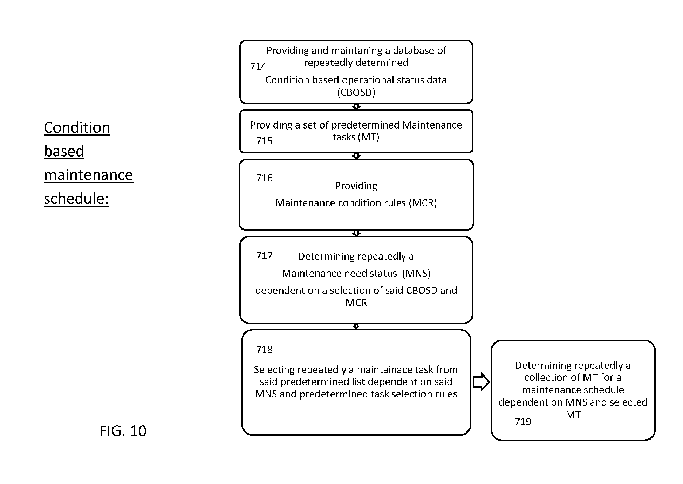

The dynamic condition based maintenance is in an embodiment of the inventive concept realised as a computer implemented method, Cf. Fig 10, executed by means of an on-board data processing module and a data storage module provided on deployed equipment units. The steps being performed in the on-board data processing unit that is associated with an equipment unit of a fleet and that comprises functional means and computer program code portions for:
a) Providing (714) and maintaining a database of repeatedly determined condition based operational status data of said equipment unit;
   i) Said condition based operational status data being determined based on and dependent on sensor and/or manual input of operational status data;
b) Providing (715) a set of predetermined maintenance tasks, for example a selection of:
   i) Previously defined maintenance tasks that are stored in the on-board system and preferably in the central system;
   ii) Temporary maintenance tasks dependent on directive or control commands from generated in and received from the central system, temporarily stored in the local system and stored in a maintenance task history in the local system and in the central system. Such a temporary maintenance task may:
      (1) Trigger an existing task temporarily; or
      (2) Commands or prompts a temporary new task inserted in the maintenance schedule.
   iii) New centrally generated tasks received from the central system, stored in the local system and then central system.
      Obsolete tasks can be removed in response to a directive from the central system. Temporary tasks may be generated in the local system in response to detected unexpected events or conditions. Such unexpected events or conditions and/or tasks are in one embodiment reported to the central system, which analyses the situation, decides, defines a new task. The new task may be communicated to other units in a fleet as an update of a predetermined task list or as a command for triggering a temporary maintenance task.
c) Providing (716) maintenance condition rules for determining maintenance need status, for example degree of urgency or conditions for performing a task;
d) Determining (717) repeatedly a maintenance need status dependent on a selection of said condition based operational status data and said maintenance condition rules; for example according to the above described counter values and threshold values;
e) Selecting (718) repeatedly a maintenance task from said set of predetermined maintenance tasks list dependent on said maintenance need status and predetermined task selection rules;
f) Determining (719) repeatedly a collection of current maintenance tasks into a maintenance schedule dependent on said maintenance need status and said selected maintenance task.

Maintenance task priority is preferably controlled by determining, dependent on said maintenance need status and predetermined priority rules, a priority value for each of the selected current maintenance tasks of the maintenance schedule. The timing of maintenance tasks is controlled by determining, dependent on said maintenance need status, said predetermined priority rules and predetermined timing rules, a timing value for each of the selected maintenance tasks of the maintenance schedule.

The maintenance schedule is preferably mainly generated in the on-board local service system and or the maintenance support unit. The local system repeatedly reports to the central system by communicating the maintenance schedule to a remote central receiving unit, i.e. the remotely located central service platform system.

The maintenance schedule method comprises machine controlled guiding of an operator to perform maintenance tasks. The method comprises the steps of:
a) storing a collection of operator support instructions;
b) determining a current maintenance task dependent on the maintenance schedule;
c) selecting an operator support instruction dependent on the determined current maintenance task;
d) presenting the selected operator support instruction on a human perceptible output interface.

When maintenance tasks have been performed these are stored in a history available for services concerning following up the maintenance. The maintenance system method comprises the steps of:
a) Receiving an input of a maintenance task execution information via an input interface by manual or sensor input. This information includes a selection of information regarding for example confirmed performed task, what has been done, how has the it been done, any component replaced or new component mounted.
b) Storing the maintenance task execution information in a maintenance task log register on the local system.

The maintenance task execution information is preferably reported to the central system, by communicating the maintenance task execution information to a remote central receiving unit at the central system.

The maintenance schedule must keep track of any changes in the configuration of the monitored equipment unit. This is achieved by:
a) Receiving an input of a configuration change via an operator input interface or by a sensor signal;
b) Registering the configuration change in a local configuration definition comprising a collection of configuration parameters;
c) Communicating the configuration change to a central receiving unit at a central system.

The maintenance schedule is preferably also stored and processed in the central system. The process for handling this comprises the steps of:
a) receiving on-board determined maintenance schedules from equipment units of the fleet;
b) storing the received maintenance schedules in a database;
c) organizing the maintenance schedule information according to predetermined rules and schemes, for example by:
   i) compiling maintenance schedules for a selection of equipment units in the fleet;
   ii) determining the need for adjustment of the maintenance schedules;

Services for maintenance may further comprise planning or scheduling maintenance support functions such as mechanic, electric or computer programming workshops; and planning spare part ordering, delivery and storage in appropriate depots of material.

The directives or prompts are output via a man-machine interface dependent on time and situation of the equipment unit as determined by the system. The directives are in different embodiments dependent on a selection of parameters such as the role of the operator, current status of the equipment unit, registered historical status data as represented in the condition based operational status log, current geographical position, current situation, operator input information such as request for activity on a component.

### Configuration management

The system of the present inventive concept is in one embodiment directed to configuration management of equipment units in a fleet. The basis for the configuration management is the continuous collecting of condition based operational status data coupled to information about current configuration and components. Any change of configuration at the equipment unit is reported from the local platform system to the central platform system by computer implemented services specifically adapted to handle configuration information. The system architecture supports the practical aspects of keeping track of specific configuration on individual equipments units by coupling specific component identity or type number to a configuration definition and maintenance activities. For this purpose, components are preferably provided with memory buttons or other machine readable identification devices. The configuration is recorded in a configuration definition and when a component is the subject of maintenance activity the identity or type of the component is input to the maintenance schedule together with other maintenance information and made available for configuration management by communicating and storing the information in the central system.

An embodiment of the configuration management method and system comprises steps as well as functional means and computer program code portions adapted to realize the following functionality.

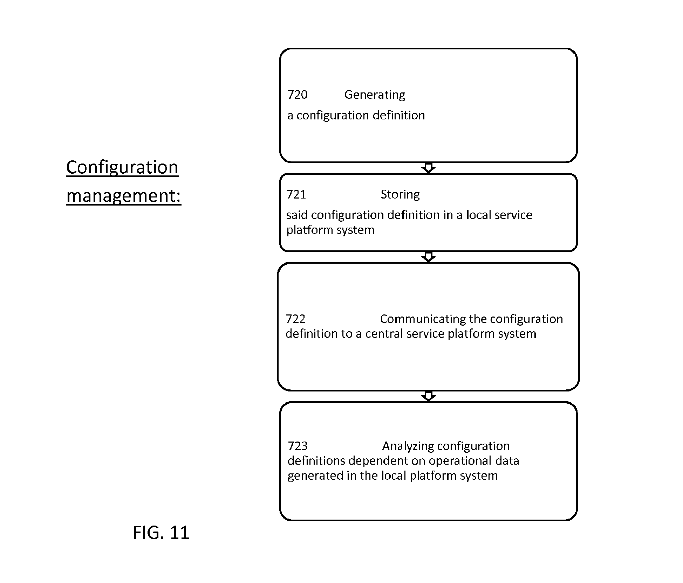

A computer implemented method for configuration management of a fleet of equipment units comprising, Cf. Fig 11:
a. Generating (720) by means of a local configuration manager software a definition of the configuration of components in an equipment unit by receiving a component identification and/or type code for said components via an input interface of a local service platform system associated with the equipment unit;
b. Storing (721) a configuration definition in a configuration definition data structure of said local service platform system;
c. Communicating (722) the configuration definition to a central service platform system;
d. Analyzing (723) configuration definitions for a fleet of equipment units dependent on operational data generated in the local platform system of the respective equipment units and communicated to the central service platform system.

The operational data upon which the configuration analysis is based comprises a selection of:
1. Condition based operational status data related to said components, said condition based operational status data being generated in the local platform system of the respective equipment units dependent on equipment status data derived from sensor signal data and/or manually input data and dependent on predetermined relations between said equipment status data and predetermined weighting parameters.
2. Reported configuration changes.
3. Fault reports.
4. Performed maintenance tasks.
5. Maintenance resources.
6. Maintenance level.
7. System load.
8. Performed activities, operations or missions.
9. User requests.

When a component is changed or modified the new component configuration information is input to the local configuration manager to the by means of a data reader such as an optical or magnetic reader pen or by manual input, and the configuration definition is updated. The updated configuration definition is communicated to a central configuration manager software in the central service platform.

Current configurations are thus analyzed by means of the configuration manager in relation to a selected combination of the condition based operational status data, fault reports, digital maintenance logs, spare parts and material supply and information from an operator of the equipment unit. A change in configuration may be initiated in the central system and is the communicated to the local platform unit, where a message or directive is generated and communicated to an operator via the maintenance support unit, preferably as an activity in the maintenance schedule or as a special directive prompting the operator to change for example a component.

## Claims

1. A computer implemented method for configuration management of a fleet of deployed equipment units each being provided with an on-board data processing module and a data storage module in a local service platform system being communicatively coupled to a central data processing system, comprising the steps of:
a. Generating by means of a local configuration manager software a definition of the configuration of components in an equipment unit by receiving a component identification and/or type code for said components via an input interface of a local service platform system associated with the equipment unit;
b. Storing a configuration definition in a configuration definition data structure of said local service platform system;
c. Communicating the configuration definition to a central service platform system;
d. Analyzing configuration definitions for a fleet of equipment units dependent on operational data generated in the local platform system of the respective equipment units and communicated to the central service platform system.

2. The method of claim 1, wherein said operational data is a selection of:
a. Condition based operational status data related to said components, said condition based operational status data being generated in the local platform system of the respective equipment units dependent on equipment status data derived from sensor signal data and/or manually input data and dependent on predetermined relations between said equipment status data and predetermined weighting parameters;
b. Reported configuration changes;
c. Fault reports;
d. Performed maintenance tasks;
e. Maintenance resources;
f. Maintenance level;
g. System load;
h. Performed activities, operations or missions; and/or
i. User requests.

3. The method of any of the preceding claims, further comprising the steps of:
a. changing or modifying a component;
b. receiving configuration information in the local configuration manager;
c. updating the local configuration definition;
d. communicating the updated configuration definition to a central configuration manager software in the central service platform.

4. The method of any of the preceding claims, further comprising the steps of:
a. Initiating a configuration change in the central system;
b. Communicating the configuration change to the local configuration manager;
c. Generating by means of the local configuration manager a directive;
d. Communicating said directive to an operator via the maintenance support unit, preferably as an activity in the maintenance schedule or as a special directive prompting the operator to change the configuration in a specified manner.

5. A computer implemented system for configuration management of a fleet of deployed equipment units each being provided with an on-board data processing module and a data storage module, comprising functional means and computer program code portions for:
a. Generating by means of a local configuration manager software a definition of the configuration of components in an equipment unit by receiving a component identification and/or type code for said components via an input interface of a local service platform system associated with the equipment unit;
b. Storing a configuration definition in a configuration definition data structure of said local service platform system;
c. Communicating the configuration definition to a central service platform system;
d. Analyzing configuration definitions for a fleet of equipment units dependent on operational data generated in the local platform system of the respective equipment units and communicated to the central service platform system.

6. The system of claim 5, wherein said operational data is a selection of:
a. Condition based operational status data related to said components, said condition based operational status data being generated in the local platform system of the respective equipment units dependent on equipment status data derived from sensor signal data and/or manually input data and dependent on predetermined relations between said equipment status data and predetermined weighting parameters;
b. Reported configuration changes;
c. Fault reports;
d. Performed maintenance tasks;
e. Maintenance resources;
f. Maintenance level;
g. System load;
h. Performed activities, operations or missions; and/or
i. User requests.

7. The system of any of the preceding claims 5-6, further comprising the steps of:
a. changing or modifying a component;
b. receiving configuration information in the local configuration manager;
c. updating the local configuration definition;
d. communicating the updated configuration definition to a central configuration manager software in the central service platform.

8. The system of any of the preceding claims 5-7, further comprising the steps of:
a. Initiating a configuration change in the central system;
b. Communicating the configuration change to the local configuration manager;
c. Generating by means of the local configuration manager a directive;
d. Communicating said directive to an operator via the maintenance support unit, preferably as an activity in the maintenance schedule or as a special directive prompting the operator to change the configuration in a specified manner.
